# EUROPEAN PATENT APPLICATION

(11) **EP 0 719 810 A2**
(43) Date of publication of application: **03.07.1996**
(21) Application number: 95309418.2
(22) Date of filing: 22.12.1995
(51) Int. Cl.: C08G 63/52, C08L 67/07

(54) **Unsaturated polyester resins**

(30) Priority: 27.12.1994 US 364355
(71) Applicant: OWENS-CORNING FIBERGLAS CORPORATION, Toledo, Ohio 43659 (US)
(72) Inventor: Hager, William G., Reynoldsburg, Ohio 43068 (US); Wilson, Edward L., Newark, Ohio 43055 (US); Krumlauf, Paul R., Thornville, Ohio 43076 (US)
(74) Representative: West, Alan Harry

(57) **Abstract**

There are described end caps that, when copolymerized with unsaturated polyesters, provide high performance structural SMC products. In one embodiment, acrylates terminate the unsaturated polyester with unsaturated end groups. Resulting moldings provide smooth surface automotive parts.

## Description

This development relates to unsaturated polyester resins. This development also relates to using these compositions for applications in the automotive industry. Specifically, the invention relates to Sheet Molding Compositions (SMCs) requiring significantly lower pressure during compression molding than typical compositions.

Unsaturated polyester resin compositions are finding increased use in the automotive industry as sheet moldings compound (SMC) formulations from which component parts, especially body panels, can be molded. The unsaturated polyester resin compositions contain, in addition to the unsaturated polyesters and monomer components, so-called "low-profile" additives which are thermoplastic polymers that act to prevent undesirable shrinkage as the composition is being molded into a thermoset article.

Recent developments have greatly improved the surface of the resulting automotive part. The search, however, for further improvement in surface continues. In addition, typical SMCs for automotive applications require expensive tooling and relatively high mold pressure to successfully mold large parts (e.g., automotive hoods).

We now have developed a polyester having either unreactive or reactive, unsaturated end groups. The preferred embodiment of this invention contains unsaturated end groups. The unsaturated end groups may be glycidyl ethers (such as glycidyl methacrylate or other acrylates), alcohols (such as hexanol, propylated alkyl alcohol), or acids (such as stearic acid, octanoic acid). We have found these polyester resins to be very useful for low-pressure SMC moldings. Our findings show several orders of magnitude improvement in surface. Surface analysis resulted in Loria values of 36. Loria values of 50 to 70 are considered quite good for surface smoothness of molded automotive parts. Lower values mean smooth surface.

The resin composition we developed comprises:
(a) an unsaturated polyester comprising a polycondensation of dihydric alcohols and ethylenically unsaturated polycarboxylic acids; and
(b) a reactive or unreactive polyester end capper. When the end capper is reactive, it is able to react with unsaturated polyester and any reactive monomer during cure. When it is unreactive, it simply blocks the chain end during the thickening reaction.

In the preferred embodiment of the invention, the end cappers are glycidyl acrylates represented by the formula: 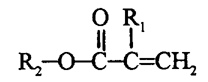 wherein R₁ is hydrogen or an alkyl radical having 1 to 5 carbon atoms, and R₂ is a glycidyl ester group having the formula: 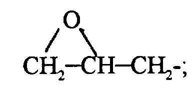 or 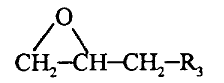 wherein R₃ ranges from C₇H₁₄O₃- to C₁₁H₂₀O₃-. Generally, R₃ is comprised of reaction products employing 1,4-butanediol, neopentyl glycol, resorcinol, cyclohexanedimethanol, and the like.

Generally, the glycidyl acrylates have the composition wherein:
R₁ is hydrogen or an alkyl radical having 1 to 5 carbon atoms;
R₂ is C₃H₅O- to C₁₄H₂₅O₄-
R₃ is C₇H₁₄O₃- to C₁₁H₂₀O₃-
Preferred glycidyl acrylates have the composition wherein:
R₁ is hydrogen or an alkyl radical having 1 to 3 carbon atoms;
R₂ is C₃H₅O- to C₁₀H₁₉O₄-
R₃ is C₇H₁₄O₃- to C₈H₁₆O₃-

The dihydridic alcohols of this invention are represented by the formula

HO-(R₄-O)_{X}-OH

wherein R₄ is an alkyl radical having 2-10 carbon atoms and X is an integer from 1 to 4. Preferably, we employ dihydridic alcohols with alkyl groups having 2 to 5 carbon atoms. We also prefer glycols chosen from a group of high-performance glycols including neopentyl glycol (NPG), 1,4-cyclohexanedimethanaol (CHDM) 2,2,4-trimethyl-1,3-pentanediol (TMPD), and 2-methyl-1,3-propanediol (MPD).

We prepared the polyesters in two steps, beginning with the polyester condensation of one or more polybasic acids and one or more polyhydridic alcohols in a molar ratio of about 1:1. The condensation is generally stopped at unusually high acid value (50-80 mg KOH/g resin rather than the conventional 10-30 mg KOH/g resin). In the second step (post polymerization functionalization), the residual acid groups of the polymer are reacted with the epoxy group of the acrylate with a ratio of polybasic acid to acrylates of about 2-10:1. In this way, the acrylate is incorporated into the product. In summary, we use the epoxide/acid reaction to attach the acrylate to the polyester.

In a second embodiment of the invention, we prepared the polyesters again in two steps, beginning with the polyester condensation of one or more polybasic acids and one or more polyhydridic alcohols in a molar ratio of about 1:1. After stopping the polycondensation at relatively high values (acid value of 50-80 mg KOH/g resin), we add an unsaturated monohydridic alcohol of the following formulation:

HO-(R₅-O)_{Y}-CH=CH₂

where R₅ is an alkyl radical having 2-10 carbon atoms and Y is an integer from 1 to 4. Preferably, we employ monohydridic alcohols with alkyl groups having 2 to 6 carbon atoms. We occasionally add an esterification catalyst at this time such as dibutyltin oxide or the like. Final polycondensation lowers the acid value into the standard range of 10-30 mg KOH/g resin.

The unsaturated polyester comprises the polycondensation reaction product of one or more dihydric alcohols and one or more ethylenically unsaturated polycarboxylic acids. By polycarboxylic acid is generally meant the polycarboxylic or dicarboxylic acids or anhydrides, polycarboxylic or dicarboxylic acid halides, and polycarboxylic or dicarboxylic esters. Suitable unsaturated polycarboxylic acids, and the corresponding anhydrides and acid halides that contain polymerization carbon-to-carbon double bonds, may include maleic anhydride, maleic acid, and fumaric acid. A minor proportion of the unsaturated acid, up to about forty mole percent, may be replaced by dicarboxylic or polycarboxylic acid that does not contain a polymerizable carbon-to-carbon bond. Examples of which include O-phthalic, isophthalic, terephthalic, succinic, adipic, sebacic, methyl-succinic, and the like. Dihydric alcohols that are useful in preparing the polyesters include 1,2-propane diol (hereinafter referred to as propylene glycol), dipropylene glycol, diethylene glycol, 1,3-butanediol, ethylene glycol, glycerol, and the like. Examples of suitable unsaturated polyesters are the polycondensation products of: (1) propylene glycol and maleic and/or fumaric acids, (2) 1,3-butanediol and maleic and/or fumaric acids, (3) combinations of ethylene and propylene glycols (approximately 50 mole percent or less of ethylene glycol) and maleic and/or fumaric acids, (4) propylene glycol, maleic and/or fumaric acids, and dicyclopentadiene reacted with water.

In another preparation within this invention, one or more polybasic acids and one or more polyhydridic alcohols are reacted first to form a polyester in a molar ratio of about 1:1. In the second step, the residual acid groups of the polyester are reacted with an unsaturated alcohol such as propoxylated alkyl alcohol and the like. In a third embodiment of the invention, an unreactive end capper is reacted with the polyester in a one-step synthesis approach: one or more polybasic acids and one or more polyhydridic alcohols are reacted in the presence of one or more of the following monofunctional compounds taken from (but not limited to) the following table.

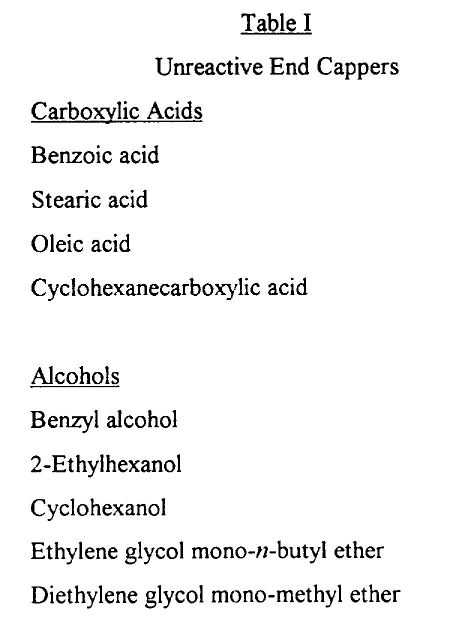

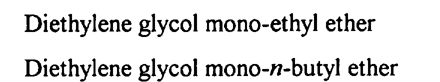

The monomer component of the resinous system comprises materials that copolymerize with the unsaturated polyester. The ethylenically unsaturated monomer that is copolymerizible with the unsaturated polyester is most generally styrene; however, methyl-styrene is also useful, as are acrylates and methacrylates such as methyl-acrylates, ethyl-acrylate, methyl-methacrylate, ethyl methacrylate, etc.

The low-profile additive component of the resinous system comprises the thermoplastic polymers which cause phase separation and void formation, thus compensating for polymerization shrinkage that typically occurs during curing. Low-profile additives are materials that, when mixed in an unsaturated polyester and cured, result in a multi-phase system. Some polymers that are useful as low-profile additives include homopolymers and copolymers of acrylic and methacrylic acid esters, cellulose acetate butyrate, vinyl acetate homopolymers and copolymers, polyurethanes prepared from polyisocyanates, preferably diisocyanates, and polyether polyols, numerous saturated polyesters, polycaprolactone, styrene-butadiene copolymers, some modified celluloses, and certain alkyl oxide polymers. The above list of low-profile additives is not intended to list all low-profile additives but rather to show examples of materials which have been used to cause the multi-phase morphology present in low-profile resins.

The acid number to which the polymerizable unsaturated polyesters are condensed generally ranges from 30 to 80. Preferably, the acid number ranges from 40 to 70. The weight average molecular weight of the unsaturated polyester ranges from 500 to 5,000 g/mole. Preferably, the weight average molecular weight ranges from 1,000 to 4,000 g/mole.

The sheet molding compound of this invention also may include other conventional materials. For example, conventional chemical thickeners may be physically mixed into the resin. The chemical thickeners generally include metal oxides, hydroxides, and alkoxides of Group II, III, or IV from the Periodic Table. Calcium oxide and magnesium oxide or the respective hydroxides are most often employed. In preferred embodiments, the thickener is present in amounts ranging from about 0.5 to about 6 parts, by weight. The thickener is generally suspended in a carrier resin, as is known in the art. The carrier material comprises a composition which does not react with the thickener such as, for example, polymethylmethacrylate, polyvinylacetate, saturated or unsaturated polyesters, and similar materials. The carrier resin is present in amounts ranging from about 0.5 to about 8 parts, by weights, based on one hundred parts of the system.

Catalysts also may be incorporated in small amounts into thermosetting polyester resins containing ethylenically unsaturated monomer to aid in curing or cross-linking the unsaturated polyester with the monomer. Such catalysts are well known and may be similarly utilized in this invention to aid in curing the unsaturated polyester and monomer mixed with the low-profile thermoplastic polymer. Typical catalysts, for example, include organic peroxide and peracids such as tertiary butyl perbenzoate, tertiary butyl peroctoate, benzoyl peroxide, and the like. The amounts of catalysts may be varied with the molding process and similarly varied with the level and types of inhibitors utilized, in a manner well known in the art. In preferred embodiments, the catalyst is present in amounts ranging from about 0.5 to about 2.5 parts, by weight, based on one hundred parts of the system.

Curing of the composition is carried out under heat and pressure typically, in closed, preferably positive-pressure-type molds. Mold-release agents may be added to the compositions to perform their normal function, as is well understood in the art. In preferred embodiments, the mold-release agents are present in amounts ranging from about 0.5 to about 6.0 parts, by weights, based on one hundred parts of the four-component resin system.

Fibers, fillers, and pigments normally added to resin compositions can be likewise in formulating the sheet molding composition of this invention. Reinforcing fibers or fibrous reinforcement is taken to mean glass fibers in one form or another, such as glass fabrics, chopped glass strands, chopped- or continuous-strand glass-fiber mat; however, the terms also include reinforcing agents which may also be used if desired, for example, asbestos, cotton, synthetic organic fibers, and metals. Fillers, usually inert, and inorganic material useful with the compositions include, for example, clay talc, calcium carbonate, silica, calcium silicate, and the like. In preferred embodiments, the fillers are present in amounts ranging from about 165 to about 250 parts, by weight, based on one hundred parts of the system.

Examples of pigments include carbon black, iron oxide, titanium dioxide, and the like, as well as organic pigments. In preferred embodiments, the pigments are present in amounts ranging from about 0 to about 4 parts, by weight, based on one hundred parts of the four-component resinous system.

In one aspect of the present invention, the preparation of the sheet molding composition is generally carried out by blending together a first portion comprising the unsaturated polyester, the low-profile additive, the monomer, and such additives as a catalyst, mold-release agent, and fillers. This is generally known in the industry as the A-side formulation. The second portion (generally known as the B-side formulation) comprises the thickening agent and a carrier resin therefor, and such additives as pigments and mold-release agents. In another aspect of the invention, an additional or secondary monomer may be is added to the B-side formulation in which the thickener is suspended. The additional monomer comprises vinyl toluene or styrene and is present in amounts ranging from about 1 to 8 parts, by weight, based on one hundred parts of the four-component resinous system.

The sheet molding composition of the present invention can be prepared by mixing the components in a suitable apparatus at temperatures which are conventional and known to those skilled in the art. Once the sheet molding composition is formulated, the composition can be molded into thermoset articles having a desired shape. The actual molding cycle will, of course, depend upon the exact composition being molded. In preferred embodiments, suitable molding cycles are conducted at temperatures ranging from about 250-350°F (121-177°C) for periods of time ranging from about 1/3 to about 5 minutes.

The following formulations are provided to illustrate examples of the compositions of the present invention.

### INDUSTRIAL APPLICABILITY

### Example I

To a 10-gallon stainless-steel reactor fitted for polyester synthesis, we loaded 16.1 kg propylene glycol, 18.9 kg maleic anhydride, and 14.0 g of 10% solution of toluhydroquinone THQ. We heated the reactor to 205°C or until the acid value reaches 45-60 mg KOH/g resin. We then cool the reactor to 120°C.

While keeping the molten polyester at 120°C, we added to the reactor the following:
- Butylatedhydroxytoluene 8.7g
- Para-benzoquinone (PBQ inhibitor) 0.8g
- N,N-Dimethylbenzylamine (DMBA; GMA addition catalyst) 34.7g
- Glycidyl Methacrylate (GMA Reactive End-Capper) 1600.0g

We added GMA dropwise so as not to exceed 120°C after addition is complete and then held the reactor at 120°C for 0.5-1.0 hrs.

For thinning, we then added the resin at 120°C to the following mixtures:
- Styrene (Reactive Diluent) 17.8kg
- 3-Tert-Butylhydroquinone (Inhibitor) 2.12g
- PBQ (Inhibitor) 0.8g
- Butylatedhydroxyanisole (BHA; Inhibitor) 2,6-Di-Tert-Butyl-4-methoxyphenol 1.25g

### Example II

Unsaturated polyesters of low viscosity with highly reactive chain ends of Example I allow the following SMC formulation for excellent surface to be successful.

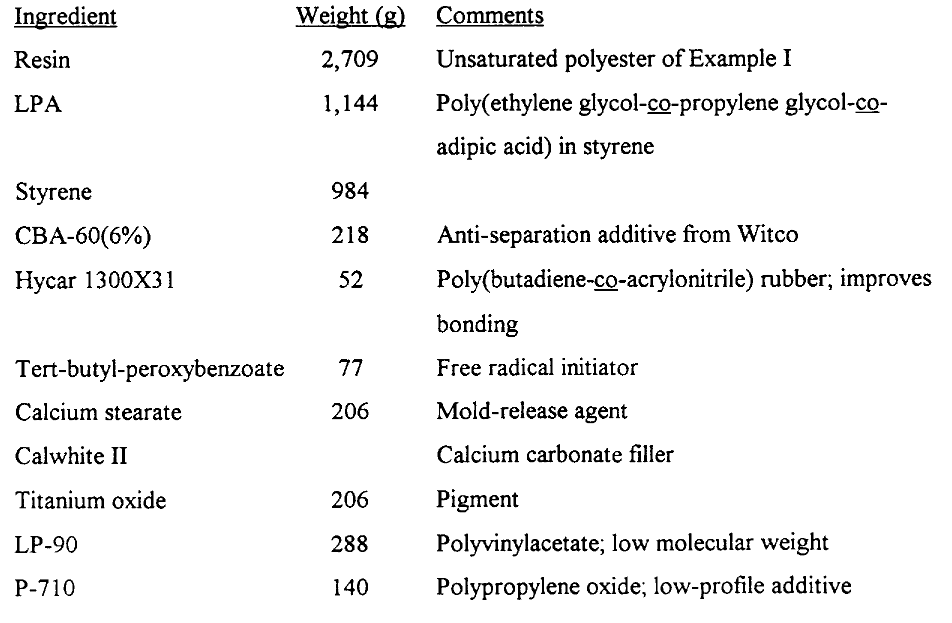

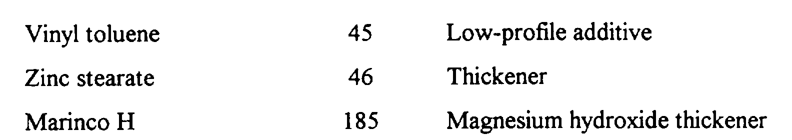

The resin was formulated into SMC and allowed to maturate for several days. Typical viscosity of the resin at molding time was 6-20 MM cps (6,000-20,000 Pa·s) vs. typically 20-40 MM cps (20,000-40,000 Pa·s).

The SMC was molded at 30-40 tons [27.2-36.3 metric tons] (rather than standard 108 tons [98 metric tons]), and an excellent part with good surface was obtained from a 12 x 18 (305mm x 457mm) mold.

Surface analysis revealed a Loria value of 36.

A very acceptable Loria value for auto parts is a Loria of 50-70 (lower values mean smoother surface).

### Example III

### FIRST STAGE

To a 10-gallon, 316 stainless-steel reactor is added the following:

| Ingredient | Amount |
|---|---|
| Maleic anhydride | 18.51 kg |
| Propylene glycol | 15.79 kg |
| Toluhydroquinone | 14.0 g |

Heat reactants to 205°C, and bring them to the following end point:
Acid value = 40-45 mg KOH/g resin
Melt viscosity (cone & plate) = 3.9-4.5 poise (0.39-0.45 Pa·s)
Cool the reactor to 135°C and add the following:

### SECOND STAGE

| Ingredient | Amount |
|---|---|
| Toluhydroquinone | 1.50 g |
| Dibutyltin oxide | 10.0 g |
| Propoxylated allyl alcohol | 2.0 kg |

Reheat to 200°C, and proceed to the following end points:
Acid value = 18-22
Melt viscosity = 6-7 poise (0.6-0.7 Pa·s)

### Thinning

The above resin is let down into styrene that has been heated to 80°C :

| Ingredient | Amount |
|---|---|
| Styrene | 15.0 kg |
| *p*-Benzoquinone | 0.71 g |
| Hydroquinone | 3.55 g |

### Example IV

### FIRST STAGE

To a 10-gallon, 316 stainless-steel reactor is added the following:

| Ingredient | Amount |
|---|---|
| Propylene glycol | 16.68 kg |
| Maleic anhydride | 18.59 kg |
| Benzoic acid | 2.51 kg |
| Toluhydroquinone | 7.5 g |

Heat reactants to 205°C, and bring them to the following end points:
Acid value = 2025 mg KOH/g resin
Melt viscosity (cone & plate) = 7.5-9.0 poise (0.75-0.90 Pa·s)

### Thinning

The above resin is let down into styrene that has been heated to 80°C :

| Ingredient | Amount |
|---|---|
| Styrene | 13.2 kg |
| *p*-Benzoquinone | 0.63 g |
| Hydroquinone | 3.0 g |

## Claims

1. A low molecular weight unsaturated polyester resin composition for a sheet molding compound, comprising:
a low molecular weight unsaturated polyester comprising a polycondensation product of one or more polyhydric alcohols and one or more ethylenically unsaturated polycarboxylic acids; and
unsaturated end caps which are able to block the polyester chain ends from complexing with thickening agents during maturation leading to low pressure molding compounds, and are optionally able to react with the unsaturated polyester or with an olefinically unsaturated monomer if present.

2. A composition according to claim 1, wherein the unsaturated end caps are derived from glycidyl-acrylates of the general formula: 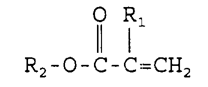 in which R₁ is hydrogen or alkyl having 1 to 5 carbon atoms, and R₂ is glycidyl of the formula: 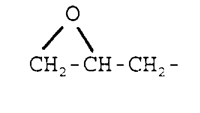 or 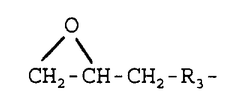 in which R₃ ranges from C₇H₁₄O₃- to C₁₁H₂₀O₃-, and terminate some of the low molecular weight unsaturated polyester with unsaturated end groups.

3. A composition according to claim 2, wherein R₁ is hydrogen or alkyl having 1 to 3 carbon atoms, R₂ ranges from C₃H₅O- to C₁₀H₁₉O₄-, and R₃ ranges from C₇H₁₄O₃- to C₈H₁₆O₃-.

4. A composition according to claim 2, wherein R₁ is hydrogen or methyls and R₂ is C₃H₅O-.

5. A composition according to claim 1, wherein the end caps are derived from dihydric alcohols of the general formula:
HO-(R₄-O)_{X}-OH
in which R₄ is alkylene having 2-10 carbon atoms and X is an integer from 1 to 4.

6. A composition according to claim 5, wherein R₄ is alkylene having 2 to 5 carbon atoms.

7. A composition according to claim 5, wherein the dihydric alcohol is selected from neopentyl glycol, 1,4-cyclohexanedimethanol, 2,2,4-trimethyl-1,3-pentanediol and 2-methyl-1,3-propanediol.

8. A composition according to claim 1, wherein the end caps are derived from polycarboxylic acids.

9. A composition according to any one of claims 1 to 8, comprising also one or more olefinically unsaturated monomers which copolymerize with the unsaturated polyester.

10. A composition according to any one of claims 1 to 9, comprising also one or more low-profile thermoplastic polymers which cause phase separation and porosity during curing.

11. A composition according to any one of claims 1 to 4, 9 and 10, comprising an unsaturated polyester comprising a polycondensation product of propylene glycol and maleic anhydride and glycidyl methacrylate which copolymerizes with the unsaturated polyester and terminate some of the low molecular weight unsaturated polyester chains with unsaturated end groups.

12. A composition according to claim 11, comprising also styrene which copolymerizes with the polyester.

13. A composition according to claim 11 or claim 12, wherein the low molecular weight unsaturated polyester has a number average molecular weight of 500 to 5,000.

14. A composition according to any one of claims 1, 9 and 10 comprising an unsaturated polyester comprising a polycondensation product of propylene glycol and maleic anhydride and a propoxylated alkyl alcohol which copolymerizes with the unsaturated polyester and terminates some of the low molecular weight unsaturated polyester chains with unsaturated end groups.

15. A composition according to any one of claims 1, 9 and 10, comprising an unsaturated polyester comprising a polycondensation product of propylene glycol and maleic anhydride and benzoic acid which copolymerizes with the unsaturated polyester and terminates some of the low molecular weight unsaturated polyester with unreactive end groups.

16. A composition according to any one of claims 1 to 15, wherein the low molecular weight unsaturated polyester has a number average molecular weight of 500 to 5,000.
